# EUROPÄISCHE PATENTANMELDUNG

(11) **EP 1 650 643 A1**
(43) Veröffentlichungstag der Anmeldung: **26.04.2006**
(21) Anmeldenummer: 04025245.4
(22) Anmeldetag: 22.10.2004
(51) Int. Cl.: G06F 3/033

(54) **Bereitstellung von kontextspezifischen Informationen**

(71) Anmelder: SIEMENS AKTIENGESELLSCHAFT, 80333 München (DE)
(72) Erfinder: Weinländer, Markus, 91230 Happurg (DE)

(57) **Zusammenfassung**

Die Erfindung betrifft ein System sowie ein Verfahren zur Bereitstellung von kontextspezifischen Informationen (1). Das System weist ein Anzeigemittel (2) zur Darstellung eines beweglichen Anzeigesymbols (3) zur Anzeige einer Position und zur Darstellung eines Anzeigebereichs (4) zur Anzeige der kontextspezifischen Informationen (1) auf. Um die Bereitstellung der kontextspezifischen Informationen (1) anwenderfreundlicher zu gestalten, wird vorgeschlagen, dass der Anzeigebereich (4) mit dem beweglichen Anzeigesymbol (3) verknüpft beweglich darstellbar ist.

## Beschreibung

Die Erfindung betrifft ein System sowie ein Verfahren zur Bereitstellung von kontextspezifischen Informationen, wobei das System ein Anzeigemittel zur Darstellung eines beweglichen Anzeigesymbols zur Anzeige einer Position und zur Darstellung eines Anzeigebereichs zur Anzeige der kontextspezifischen Informationen aufweist.

Die DE 102 08 587 A1 beschreibt ein Verfahren zum Anzeigen von Information mit einer graphischen Benutzerschnittstelle eines Computersystems, die mindestens ein Zeigeelement aufweist, das mittels eines Eingabegeräts des Computersystems gesteuert wird, wobei das Computersystem eine Programmroutine ausführt, die nach Eintreten mindestens eines Ereignisses prüft, ob mindestens eine vorgegebene Bedingung erfüllt ist, und, falls die mindestens eine vorgegebene Bedingung erfüllt ist, Information anzeigt.

Der Erfindung liegt die Aufgabe zugrunde, die Bereitstellung von kontextspezifischen Informationen anwenderfreundlicher zu gestalten.

Diese Aufgabe wird durch ein System zur Bereitstellung von kontextspezifischen Informationen gelöst, mit einem Anzeigemittel zur Darstellung eines beweglichen Anzeigesymbols zur Anzeige einer Position und zur Darstellung eines Anzeigebereichs zur Anzeige der kontextspezifischen Informationen, wobei der Anzeigebereich mit dem beweglichen Anzeigesymbol verknüpft beweglich darstellbar ist.

Diese Aufgabe wird durch ein Verfahren zur Bereitstellung von kontextspezifischen Informationen gelöst, bei welchem mit einem Anzeigemittel ein bewegliches Anzeigesymbol zur Anzeige einer Position und ein Anzeigebereich zur Anzeige der kontextspezifischen Informationen dargestellt wird, wobei der Anzeigebereich mit dem beweglichen Anzeigesymbol verknüpft beweglich dargestellt wird.

Die Erfindung ermöglicht die Bereitstellung von kontextspezifischen Informationen dort, wo sie von einem Anwender des Systems tatsächlich benötigt wird. Der Anwender steuert das bewegliche Anzeigesymbol zur Anzeige einer Position üblicherweise mit einem entsprechenden Eingabemittel und konzentriert seine Aufmerksamkeit auf den Bereich auf dem Anzeigemittel, in welchem das bewegliche Anzeigesymbol jeweils dargestellt wird. Gemäß der Erfindung wird der Anzeigebereich zur Anzeige der kontextspezifischen Informationen genau in diesem Bereich der höchsten Aufmerksamkeit dargestellt, indem der Anzeigebereich mit dem beweglichen Anzeigesymbol verknüpft beweglich dargestellt wird.

Gemäß einer vorteilhaften Ausgestaltung der Erfindung sind die angezeigten kontextspezifischen Informationen dynamisch an eine Bediensituation anpassbar. Dies ermöglicht die Bereitstellung der in der jeweiligen Bediensituation erforderlichen Informationen und erleichtert so z. B. die Bedienung eines komplexen Systems.

Gemäß einer weiteren vorteilhaften Ausgestaltung der Erfindung wird vorgeschlagen, dass die kontextspezifischen Informationen Informationen zu einem Arbeitsschritt beinhalten. Ein Anwender kann so in einem aus mehreren Arbeitsschritten bestehenden Bedienprozess anwenderfreundlich unterstützt werden, indem ihm zu jedem Arbeitsschritt, insbesondere zum jeweils nächsten Arbeitsschritt, die für den jeweiligen Arbeitsschritt erforderlichen Informationen angezeigt werden.

Um den Anwender darüber zu informieren, an welcher Stelle eines Bedienprozesses er sich befindet, wird gemäß einer weiteren vorteilhaften Ausgestaltung der Erfindung vorgeschlagen, dass die kontextspezifischen Informationen Informationen über einen Fortschritt innerhalb eines Bedienprozesses beinhalten.

Dass der Anzeigebereich mit dem beweglichen Anzeigesymbol verknüpft beweglich dargestellt wird und sich somit im Fokus der Aufmerksamkeit eines Anwenders befindet, lässt sich vorteilhafterweise ausnutzen, um dem Anwender Meldungen mit hoher Priorität anzuzeigen, wenn die kontextspezifischen Informationen Fehler- und/oder Erfolgsmeldungen beinhalten.

Vorteilhafterweise ist der mit dem beweglichen Anzeigesymbol verknüpft beweglich darstellbare Anzeigebereich ein Textfenster. Das Textfenster kann je nach Umfang der darzustellenden Informationen eine entsprechend angepasste Größe aufweisen.

Kontextspezifische Informationen lassen sich vorteilhafterweise auch übermitteln, wenn der Anzeigebereich kontextspezifisch formatierbar ist. Formatierbar bedeutet dabei, dass die dargestellten Informationen in unterschiedlichen Formaten, z. B. bezüglich Schriftgröße, Schriftart, Schriftfarbe formatiert werden können, dass der Anzeigebereich als solches in unterschiedlicher Gestaltungsart formatiert werden kann, z. B. bezüglich Rahmen, Hintergrund und/oder Farbe, oder auch dass Animationselemente eingesetzt werden, z. B. Blinken, um die Aufmerksamkeit eines Nutzers noch stärker auf die angezeigten Informationen zu lenken.

Da der Anzeigebereich mit dem beweglichen Anzeigesymbol verknüpft beweglich darstellbar ist, d. h. in unmittelbarer Nähe zu dem Anzeigesymbol angeordnet ist, könnten Teile der mit dem Anzeigemittel dargestellten weiteren Informationen, welche im Aufmerksamkeitsfokus des Anwenders stehen, durch den Anzeigebereich zumindest teilweise verdeckt werden. Gemäß einer weiteren vorteilhaften Ausgestaltung der Erfindung wird daher vorgeschlagen, dass der Anzeigebereich zumindest teilweise transparent ausgeführt ist, so dass die weiteren dargestellten Informationen nicht vollkommen verdeckt werden.

Da der Anzeigebereich kontextspezifische Informationen anzeigt, wird gemäß einer weiteren vorteilhaften Ausgestaltung der Erfindung vorgeschlagen, dass der Anzeigebereich kontextspezifisch ein- und ausblendbar ist. Der Anzeigebereich wird also hauptsächlich dann angezeigt, wenn der Kontext es erfordert und kann ausgeblendet werden, wenn keine kontextspezifischen Informationen anzuzeigen sind.

Das vorgeschlagene System zur Bereitstellung von kontextspezifischen Informationen bietet sich insbesondere zur Unterstützung der Projektierung eines industriellen Automatisierungssystems an, da mit seiner Hilfe komplexe Arbeitsabläufe kontextspezifisch unterstützt werden können.

Nachfolgend wird die Erfindung anhand der in den Figuren dargestellten Ausführungsbeispiele näher beschrieben und erläutert.

Es zeigen:
- FIG 1: ein Rechnersystem mit einem Anzeigemittel zur Darstellung von Informationen und
- FIG 2 bis FIG 6: die dynamische Darstellung von kontextspezifischen Informationen in einem mehrschrittigen Bedienprozess.

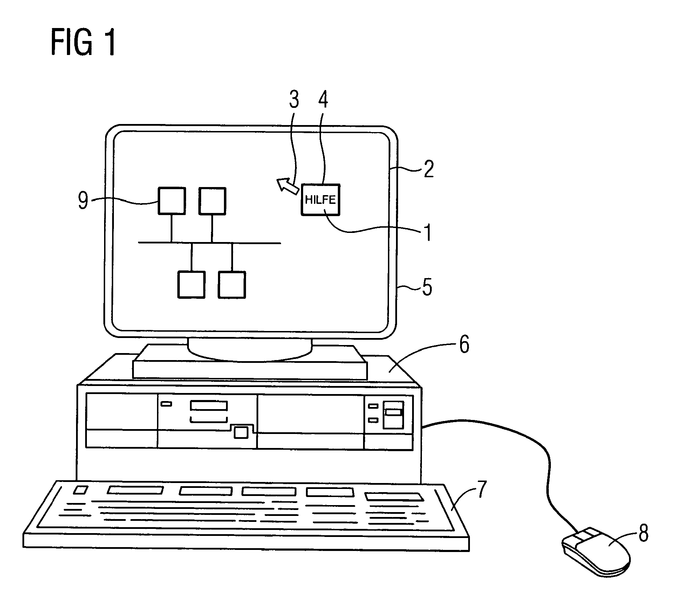

FIG 1 zeigt ein Rechnersystem mit einem Rechner 6, z. B. einem Personal Computer (PC), einem Anzeigemittel 2, z. B. einer graphischen Oberfläche eines Computermonitors 5, sowie Eingabemitteln, in diesem Fall eine Tastatur 7 und eine Computermaus 8. Mit dem Anzeigemittel 2 werden Informationen 9 dargestellt sowie ein bewegliches Anzeigesymbol 3 und ein Anzeigebereich 4 zur Anzeige von kontextspezifischen Informationen 1. Die Bewegungen des Anzeigesymbols 3, welches zur Anzeige einer Position auf der graphischen Benutzeroberfläche dient, sind durch die Eingabemittel, in diesem Fall also durch die Tastatur 7 und/oder die Computermaus 8, gesteuert.

Bei Engineeringsystemen besteht teilweise ein Interaktions-Paradigma, bei dem zunächst ein Tool, d. h. ein Softwarewerkzeug, eine Applikation oder eine Funktionalität, ausgewählt und anschließend verschiedene Objekte mit der Maus selektiert werden, um das Tool auf diese Objekte anzuwenden. Ein Beispiel ist die Projektierung von Datenkommunikationsverbindungen zwischen zwei Geräten: Der Anwender wählt zunächst das Tool "Verbindung herstellen", klickt dann auf das Sende-Gerät und anschließend auf das Empfänger-Gerät. Insbesondere ungeübte Anwender benötigen häufig Unterstützung nach der Auswahl des Tools, da sie nicht wissen, welche Schritte als nächstes ausgeführt werden müssen.

Diese Unterstützung wird bisher dadurch gegeben, dass an einem festen Platz des Bildschirms ein Hilfetext angezeigt wird, z. B. in der so genannten Statuszeile am unteren Rand des Bildschirms. Usability-Tests haben aber erwiesen, dass solche Hilfebereiche oft nicht vom Anwender entdeckt und gelesen werden, weil der Aufmerksamkeits-Fokus auf den Mauszeiger gerichtet ist und nicht auf andere Bereiche des Bildschirms. Diese Konzentration des Wahrnehmungsfeldes auf einen eng begrenzten Bereich des Bildschirms nimmt sogar noch zu, wenn der Anwender (z. B. als Neuling oder unter Zeitdruck) unter Stress steht (vgl. Colin Ware, Information Visualization: Perception for Design, Morgan Kaufmann Publishers, San Francisco, USA, 2000). Eine zweite bekannte Art der Unterstützung sind Assistenten (so genannte Wizards). Dabei werden verschiedene Dialoge der Reihe nach aufgeblendet, in denen der Anwender je einen Arbeitsschritt erklärt bekommt und ausführen kann. Der Nachteil dieser Lösung ist es, dass diese Assistenten in eigenen festen Dialogfenstern, nicht aber in der normalen Applikation ablaufen. Dadurch sind Zusatzkosten bei der Entwicklung notwendig. Außerdem hat ein Anwender, der einen Assistenten erlernt hat, nicht unbedingt erlernt, wie sich die Funktion direkt in der Applikation ausführen lässt. Mit der erfindungsgemäßen Lösung kann ein Anwender die eigentliche Applikation erlernen, nicht nur einen Assistenten, so dass er schneller effizient auch ohne die Hilfestellung arbeiten kann. Zudem werden durch den Verzicht auf Assistenten Entwicklungs- und Dokumentationskosten gespart.

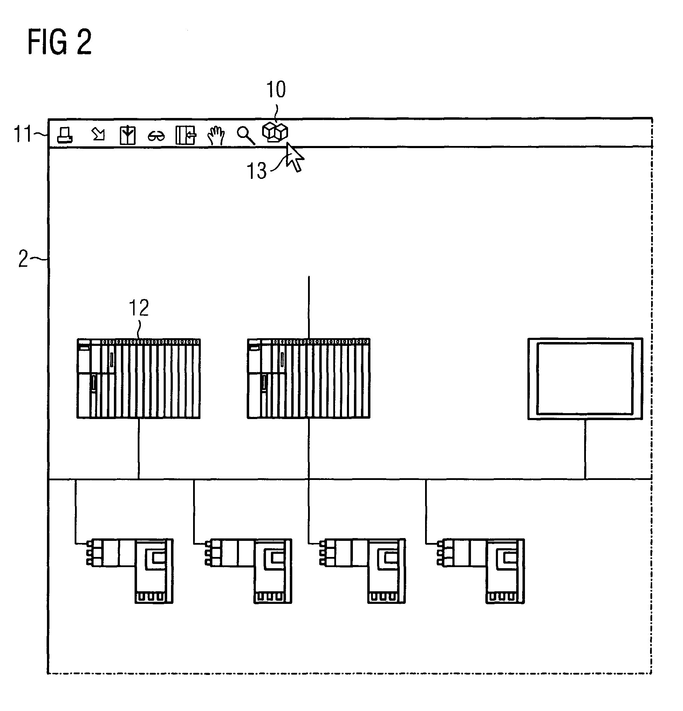

FIG 2 bis FIG 6 erläutern die Bereitstellung von kontextspezifischen Informationen gemäß einem Ausführungsbeispiel der Erfindung. Dargestellt ist jeweils ein Ausschnitt eines Anzeigemittels 2, z. B. ein Ausschnitt einer graphischen Bedienoberfläche. Am oberen Rand der Bedienoberfläche ist eine so genannte Toolbar 11 dargestellt, welche unterschiedliche Bearbeitungswerkzeuge, durch Icons symbolisiert, einem Anwender zur Verfügung stellt. Im Ausführungsbeispiel wird ein Bildschirmausschnitt einer Applikation "Hardware- und Netzfiguration" gezeigt. Diese Applikation ist Teil eines Systems zur Projektierung eines industriellen Automatisierungssystems, auch Engineeringsystem genannt. Der Anwender kann die Applikation mittels Steuerung des Mauszeigers 13, ein Ausführungsbeispiel eines Anzeigesymbols 3 zur Anzeige einer Position, bedienen. Mit dem Anzeigemittel 2 werden weitere Informationen 12 dargestellt, in diesem Fall Symbole, welche Automatisierungsgeräte repräsentieren, welche mit dem Engineeringsystem projektiert werden sollen. Im Ausführungsbeispiel projektiert ein Anwender mit dem System die Datenkommunikation zwischen den Geräten. Dazu aktiviert er zunächst mit einem Mausklick das entsprechende Werkzeug in der Toolbar 11, in diesem Fall das Icon 10. Die Aktivierung durch Mausklick erfolgt dadurch, dass der Mauszeiger 13 auf das Icon 10 bewegt wird und gleichzeitig eine entsprechende Anwendereingabe, in diesem Fall ein Druck auf die entsprechende Maustaste, erfolgt. Durch die Auswahl des Werkzeugs in der Toolbar 11 erhält das System die Information, welche Funktion der Anwender ausführen möchte. Das ausgewählte Werkzeug verlangt in den folgenden Schritten die Auswahl eines sendenden Geräts und eines empfangenden Geräts für die jeweilige Datenkommunikationsverbindung. Bei der Projektierung der Datenkommunikation wird der Anwender weitestmöglich durch das System zur Bereitstellung von kontextspezifischen Informationen unterstützt, wie im Folgenden dargestellt.

Bei dem beschriebenen Ausführungsbeispiel der Erfindung wird dem Anwender die Funktionsweise der Applikation durch Hilfetexte erläutert. Allerdings werden diese Hilfetexte nicht in einem fest abgegrenzten Bildschirmbereich gezeigt, sondern dort, wo sich die Aufmerksamkeit konzentriert, am Mauszeiger 13. Der Mauszeiger 13 wird also ergänzt um ein kleines Textfenster, dass sich entsprechend der Mausbewegung mit dem Mauszeiger 13 über den Bildschirm bewegt. Dieses Fenster sollte nicht zu groß sein, um nicht wichtige Teile des Bildschirms zu verdecken.

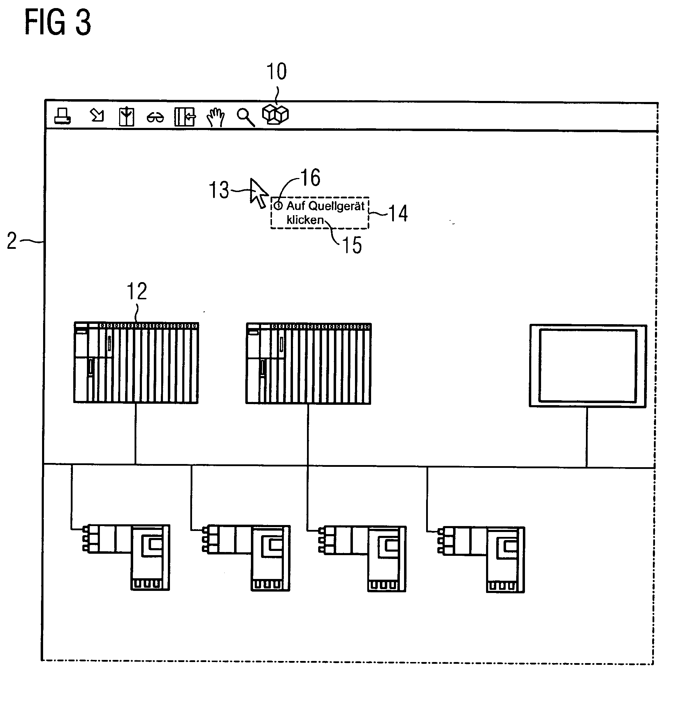

FIG 3 zeigt die Situation nach der Auswahl des Werkzeugs durch Anklicken des Icons 10 und damit der Aktivierung des Werkzeugs. In unmittelbarer Nähe zum Mauszeiger 13 und mit diesem beweglich dargestellt erscheint ein Anzeigebereich 14, in welchem kontextspezifische Informationen 15, 16 angezeigt werden, hier in Form eines Hilfefensters. In diesem Fall wird eine Anzeige 16, zur Kennzeichnung der Reihenfolge der durchzuführenden Arbeitsschritte, sowie ein Hinweistext 15 dargestellt. Der Hinweistext 15 gibt Informationen zu dem nächsten Arbeitsschritt, welcher durchzuführen ist. Zudem kann in dem Hilfefenster auch eine Anzeige der erfolgten und der noch verbleibenden Bedienschritte ausgegeben werden ("Schritt 1 von 5"). Dadurch weiß der Anwender, wie weit er im Projektierungsprozess fortgeschritten ist. Im dargestellten Fall soll der Anwender im nächsten Arbeitsschritt auf das Quellgerät klicken, entsprechend wird diese Aufforderung als kontextspezifische Information 15 im Anzeigebereich 14 dargestellt. Der Anzeigebereich 14 ist in unmittelbarer Nachbarschaft zum Mauszeiger 13 angeordnet und somit im Aufmerksamkeitsfokus des Anwenders. Wird der Mauszeiger 13 durch eine entsprechende Eingabe des Anwenders auf der graphischen Oberfläche verschoben, verschiebt sich der Anzeigebereich 14 entsprechend mit. Das Hilfefenster bewegt sich also zusammen mit dem Mauszeiger über den Bildschirm, entsprechend der Mausbewegung durch den Anwender. Der Anzeigebereich 14 "klebt" quasi am Mauszeiger 13.

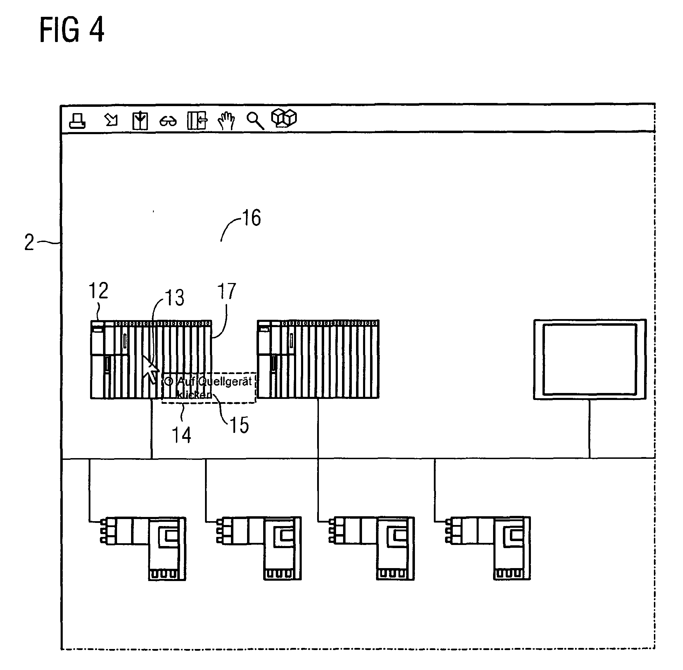

FIG 4 zeigt die graphische Oberfläche, nachdem der Anwender den Mauszeiger 13 auf das anzuwählende Quellgerät 17 positioniert hat. Der Anzeigebereich 14, welcher mit dem Mauszeiger 13 mitbewegt wird, ist im Ausführungsbeispiel mit halbtransparentem Hintergrund ausgeführt, so dass einerseits die grundlegende Struktur und der Inhalt des Bildschirms erkennbar bleibt, andererseits der kontextspezifische Hilfetext lesbar bleibt.

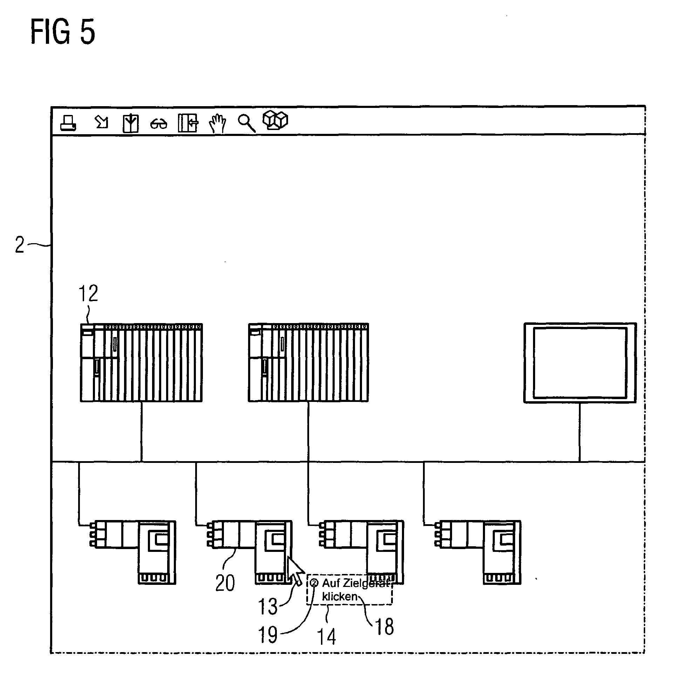

FIG 5 zeigt den Zustand, nachdem der Anwender das Quellgerät durch Klicken auf die Repräsentation des Quellgeräts auf der Anzeigeoberfläche ausgesucht hat. In diesem Fall wird der Anwender durch neue kontextspezifische Informationen 18, welche Informationen zu einem zweiten Arbeitsschritt beinhalten, wie auch durch die Nummerierung 19 gekennzeichnet, durch den Bedienprozess geführt. Die kontextspezifischen Informationen 18 erscheinen wiederum in dem zusammen mit dem Mauszeiger 13 beweglichen Anzeigebereich 14. Die kontextspezifischen Informationen 15, 18 werden somit dynamisch an den jeweiligen Kontext, in diesem Fall an den jeweiligen Arbeitsschritt bzw. den Fortschritt innerhalb des Bedienprozesses angepasst und entsprechend im Anzeigebereich 14 dargestellt. Der Anwender wählt gemäß Aufforderung durch entsprechendes Klicken das gewünschte Zielgerät, indem er den Mauszeiger 13, welcher durch die kontextspezifische Information 14 erweitert ist, auf das jeweilige Gerät 20 positioniert und durch einen Mausklick das Gerät 20 als Zielgerät auswählt.

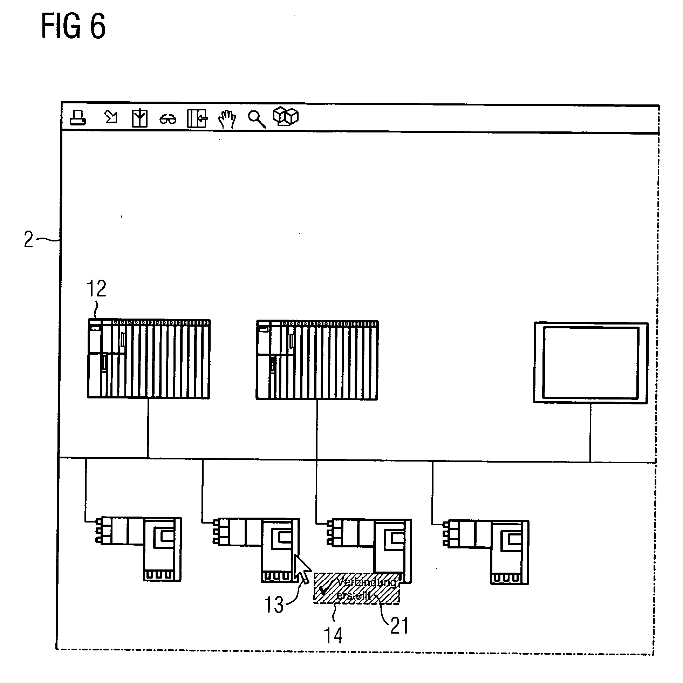

FIG 6 zeigt den Zustand nach Auswahl des Zielgeräts. In diesem Fall ist die Verbindung zwischen dem Quellgerät und dem Zielgerät erfolgreich hergestellt und es wird eine entsprechende Erfolgsmeldung im Anzeigebereich 14 dargestellt. Zusätzlich ändert sich die Hintergrundfarbe des Anzeigebereichs 14, welcher zudem nicht mehr halbtransparent ausgeführt ist. Auch durch diese kontextspezifischen Formatierungen erhält der Anwender eine Rückmeldung. Der dynamisch anpassbare Anzeigebereich 14 kann somit auch für Fehler- oder Erfolgsmeldungen verwendet werden. Hat der Anwender im beschriebenen Beispiel das Zielgerät ausgewählt, so kann der Anzeigebereich 14 für eine gewisse Zeit (z. B. 3 - 5 Sekunden) die Farbe wechseln und einen Bestätigungstext anzeigen, um anschließend ausgeblendet zu werden. In gleicher Weise können Fehlermeldungen ausgegeben werden. Hat der Anwender beispielsweise ein Gerät ausgewählt, dass als Zielgerät nicht geeignet ist, kann sich in diesem Moment das Hilfefenster für eine gewisse Zeit rot färben und einen Hinweis zum Fehler geben. Anschließend würde es wieder auf den notwendigen Bedienschritt (entsprechend FIG 5) hinweisen.

Zusammengefasst betrifft die Erfindung somit ein System sowie ein Verfahren zur Bereitstellung von kontextspezifischen Informationen 1. Das System weist ein Anzeigemittel 2 zur Darstellung eines beweglichen Anzeigesymbols 3 zur Anzeige einer Position und zur Darstellung eines Anzeigebereichs 4 zur Anzeige der kontextspezifischen Informationen 1 auf. Um die Bereitstellung der kontextspezifischen Informationen 1 anwenderfreundlicher zu gestalten, wird vorgeschlagen, dass der Anzeigebereich 4 mit dem beweglichen Anzeigesymbol 3 verknüpft beweglich darstellbar ist.

## Patentansprüche

1. System zur Bereitstellung von kontextspezifischen Informationen (1), mit einem Anzeigemittel (2) zur Darstellung
• eines beweglichen Anzeigesymbols (3) zur Anzeige einer Position und
• eines Anzeigebereichs (4) zur Anzeige der kontextspezifischen Informationen (1),
**dadurch gekennzeichnet,**
**dass** der Anzeigebereich (4) mit dem beweglichen Anzeigesymbol (3) verknüpft beweglich darstellbar ist.

2. System nach Anspruch 1,
**dadurch gekennzeichnet ,**
**dass** die angezeigten kontextspezifischen Informationen (1) dynamisch an eine Bediensituation anpassbar sind.

3. System nach Anspruch 1 oder 2,
**dadurch gekennzeichnet ,**
**dass** die kontextspezifischen Informationen (1) Informationen zu einem Arbeitsschritt beinhalten.

4. System nach einem der vorhergehenden Ansprüche,
**dadurch gekennzeichnet ,**
**dass** die kontextspezifischen Informationen (1) Informationen über einen Fortschritt innerhalb eines Bedienprozesses beinhalten.

5. System nach einem der vorhergehenden Ansprüche,
**dadurch gekennzeichnet ,**
**dass** die kontextspezifischen Informationen (1) Fehler- und/oder Erfolgsmeldungen (21) beinhalten.

6. System nach einem der vorhergehenden Ansprüche,
**dadurch gekennzeichnet ,**
**dass** der Anzeigebereich (4) ein Textfenster ist.

7. System nach einem der vorhergehenden Ansprüche,
**dadurch gekennzeichnet ,**
**dass** der Anzeigebereich (4) kontextspezifisch formatierbar ist.

8. System nach einem der vorhergehenden Ansprüche **da -**
**durch gekennzeichnet ,**
dass der Anzeigebereich (4) zumindest teilweise transparent ausgeführt ist.

9. System nach einem der vorhergehenden Ansprüche,
**dadurch gekennzeichnet ,**
**dass** der Anzeigebereich (4) kontextspezifisch ein- und ausblendbar ist.

10. System nach einem der vorhergehenden Ansprüche,
**dadurch gekennzeichnet ,**
**dass** es Teil eines Systems zur Projektierung eines industriellen Automatisierungssystems ist.

11. Verfahren zur Bereitstellung von kontextspezifischen Informationen (1), bei welchem mit einem Anzeigemittel (2)
• ein bewegliches Anzeigesymbol (3) zur Anzeige einer Position und
• ein Anzeigebereich (4) zur Anzeige der kontextspezifischen Informationen (1) dargestellt wird,
**dadurch gekennzeichnet ,**
**dass** der Anzeigebereich (4) mit dem beweglichen Anzeigesymbol (3) verknüpft beweglich dargestellt wird.

12. Verfahren nach Anspruch 11,
**dadurch gekennzeichnet ,**
**dass** die angezeigten kontextspezifischen Informationen (1) dynamisch an eine Bediensituation angepasst werden.

13. Verfahren nach Anspruch 11 oder 12,
**dadurch gekennzeichnet ,**
**dass** die kontextspezifischen Informationen (13) Informationen zu einem Arbeitsschritt beinhalten.

14. Verfahren nach einem der Ansprüche 11 bis 13,
**dadurch gekennzeichnet ,**
**dass** die kontextspezifischen Informationen (1) Informationen über einen Fortschritt innerhalb eines Bedienprozesses beinhalten.

15. Verfahren nach einem der Ansprüche 11 bis 14,
**dadurch gekennzeichnet ,**
**dass** die kontextspezifischen Informationen (1) Fehler- und/oder Erfolgsmeldungen beinhalten.

16. Verfahren nach einem der Ansprüche 11 bis 15,
**dadurch gekennzeichnet ,**
**dass** der Anzeigebereich (4) kontextspezifisch formatiert wird.

17. Verfahren nach einem der Ansprüche 11 bis 16,
**dadurch gekennzeichnet ,**
**dass** der Anzeigebereich (4) kontextspezifisch ein- und ausgeblendet wird.
